# EUROPÄISCHE PATENTSCHRIFT

(11) **EP 1 915 275 B1**
(45) Veröffentlichungstag und Bekanntmachung des Hinweises auf die Patenterteilung: **08.04.2009**
(21) Anmeldenummer: 06753956.9
(22) Anmeldetag: 30.05.2006
(51) Int. Cl.: B60N 2/20, B60N 2/12

(54) **LEHNENKLAPPUNG**
BACKREST PIVOT
DISPOSITIF DE RABATTEMENT DE DOSSIER

(30) Priorität: 12.08.2005 DE 202005012733 U
(43) Veröffentlichungstag der Anmeldung: 30.04.2008
(73) Patentinhaber: Brose Fahrzeugteile GmbH & Co. Kommanditgesellschaft, Coburg, 96450 Coburg (DE)
(72) Erfinder: NEUMANN, Guido, 98693 Ilmenau (DE)
(74) Vertreter: Tergau & Pohl Patentanwälte
(86) Internationale Anmeldenummer: PCT/EP2006/005118
(87) Internationale Veröffentlichungsnummer: WO 2007/019902

(56) Entgegenhaltungen:
- EP-A- 0 738 624
- DE-A1- 10 012 009
- DE-A1- 10 313 807

## Beschreibung

Die Erfindung betrifft eine Lehnenklappung nach dem Oberbegriff des Anspruchs 1.

Bei zweitürigen Fahrzeugen wird der Zustieg von Fondpassagieren dadurch erleichtert, dass die Rückenlehne des Fahrer-/ Beifahrersitzes nach vorne geklappt wird und die Längsverstellung des Sitzes entriegelt wird. Bei vorgeklappter Lehne kann so der Sitz ganz in die vorderste Position verfahren werden. Um nach dem Einstieg die eingestellte Längsposition wieder anzufahren weisen derartige Sitze eine Easy-Entry-Funktion auf, bei der in der Führungsscheine der Längsverstellung ein Setzanschlag ablegbar ist. Der Setzanschlag bewegt sich bei ausschließlich betätigter Entriegelung der Längsverstellung mit dem Sitz mit - wird die Lehne zwecks Einstieg nach vorne geklappt, so wird der Setzanschlag in der am Fahrzeugboden angebrachten Führungsschiene abgelegt und markiert so die eingestellte und nach Rückklappen der Lehne wieder erreichbare Sitzlängsposition. Eine derartige Einrichtung ist aus der DE 103 13 807 A1, DE 100 12 009 A1 sowie der 10057 724 A1 bekannt.

Eine Lehnenklappung nach dem Oberbegriff des Anspruchs 1 ist in Dokument EP-A-0738624 bekannt.

Komfortabel gestaltet sich eine derartige Sitzklappung, wenn die Entriegelung der Lehne durch den Hebel der Lehnenentriegelung ebenfalls die Sitzlängsverriegelung entriegelt und so der Sitz nach vorne verschoben werden kann. Die nach vorne geklappte Lehne wird dabei in dieser Position verriegelt. Das Rückschwenken der Lehne in die normale Sitzposition erfolgt hier, wenn der Sitz die durch den Setzanschlag (Memostein) definierte Längsposition erreicht. Ein Kontakt mit dem Setzanschlag entriegelt die Lehnenverriegelung der vorgeklappten Position. Die Rückenlehne kann wieder zurückgeschwenkt werden. Das Zurückschwenken der Lehne bewirkt dann das Betätigen der Längsverriegelung.

Um den Sitz auch in einer Position benutzen zu können, welcher nicht der durch den Setzanschlag definierten Position entspricht, was bspw. durch Gepäck im Fond verhinder wird, so entriegelt der Lehnenhebel die Lehnenverriegelung in der vordersten Position - der Sitz kann durch Ruckklappen der Lehne in einer vor dem Setzanschlag befindlichen Position arretiert werden. Die dem Sitzbeschlag der Lehnenneigungseinstellung zugeordnete Lehnenklappung weist hierzu eine Mechanik auf, welche die Verriegelung der Sitzlehne in der vorgeklappten Position sowohl vom Lehnenhebel als auch vom Kontakt mit dem Setzanschlag her entriegelt.

Der Erfindung liegt die Aufgabe zugrunde, eine Lehnenklappung der eingangs genannten Art insbesondere in Richtung Bauteilaufwand zu verbessern.

Dieses Problem wird erfindungsgemäß durch die Schaffung einer Lehnenklappung mit den Merkmalen des Anspruchs 1 gelöst. Demnach ist vorgesehen, dass

Eine Ausführungsform der Erfindung wird des weiteren an Hand der Figuren erläutert.

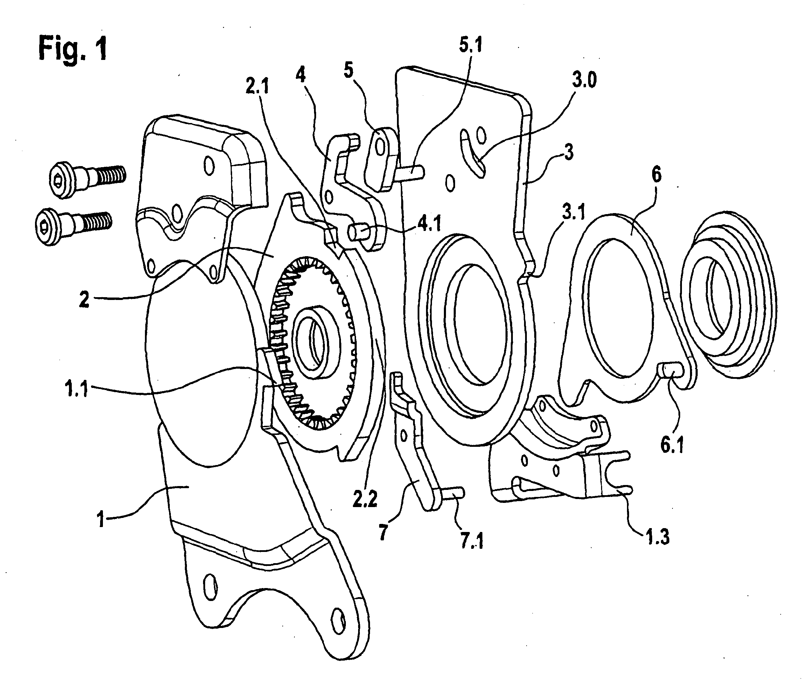

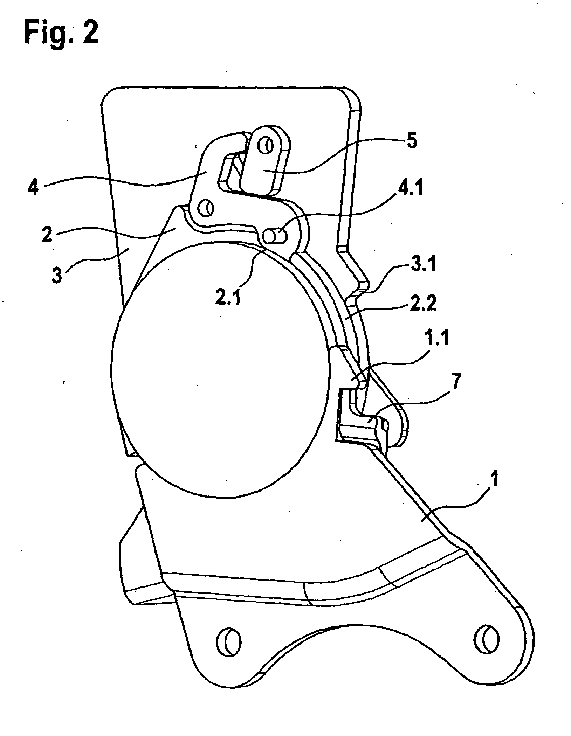

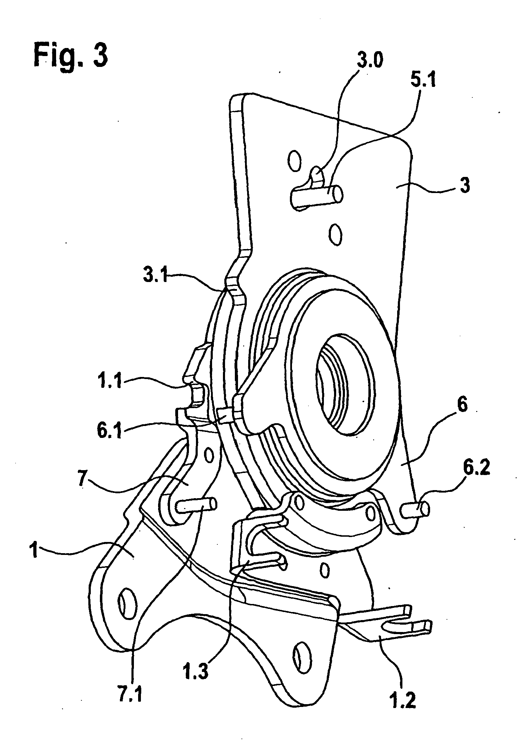

Figur 1 die Einzelteile der erfindungsgemäßen Lehnenklappung in perspektivischer Ansicht. Ein erstes, am nicht dargestellten Sitzunterteil angebrachtes Beschlagteil 1 wirkt mit einem Neigungsversteller 2 in an sich bekannter, nach dem Taumelprinzip wirkender Weise als Neigungsversteller zusammen. Das Beschlagteil 3, welches die nicht dargestellte Sitzlehne trägt, bildet mit dem Neigungsversteller 2 die Lehnenklappung. Hierzu ist am Beschlagteil 3 eine Sperrklinge 4 drehbar angelenkt, welche mit einer ersten Rast 2.1 am Neigungsversteller zusammenwirkt. Die Sperrklinke 4 in der ersten Rast 2.1 definiert die aufrechte Position der Sitzlehne. Die Sperrklinke 4 wird über einen drehbar am Beschlagteil 3 angelenkten Riegel 5 verriegelt. Der Riegel 5 ist über einen Stift 5.1 betätigbar - dieser ist durch eine Öffnung 3.0 hindurch geführt und an der anderen Seite des Beschlagteiles 3 mit einem nicht dargestellten Bowdenseil verbunden, welches von einem an der klappbaren Lehne angebrachten Hebel betätigbar ist. Figur 2 und 3 zeigen hierbei die aufrecht versiegelte Position des Beschlagteiles 3.

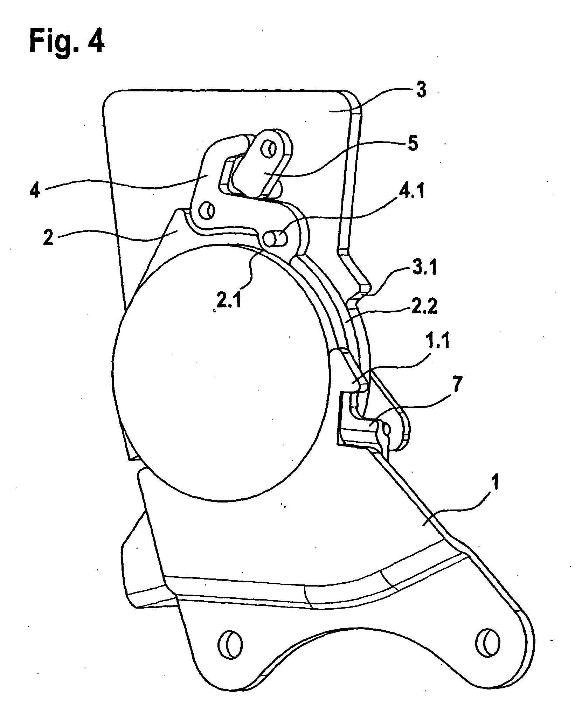

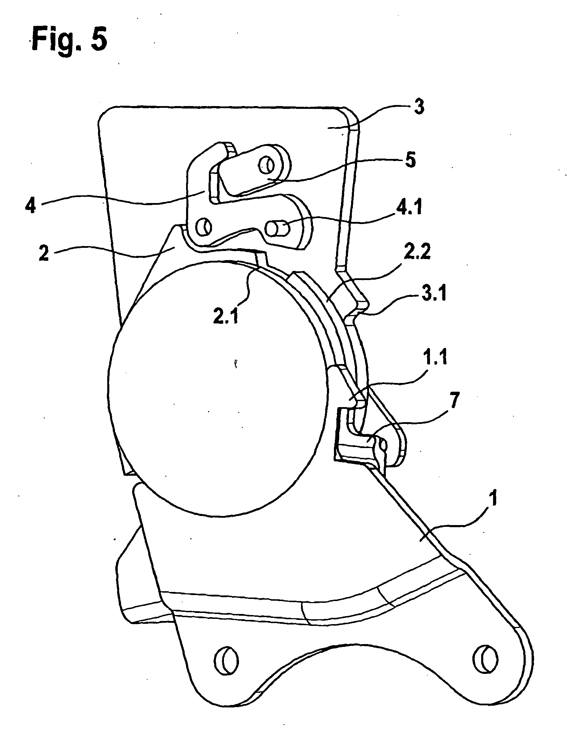

Die Figuren 4 und 5 zeigen das Verschwenken des Riegels 5. dieser wirkt hierbei auf das der Rast 2.1 abgewandte Ende der Sperrklinke 4 ein. Der Kontakt mit dem Ende der Sperrklinke 4 erfolgt hierbei zunächst nahe der Schwenkachse des Riegels 5 (Figur 4), bei einem weiteren Verschwenken des Riegels 5 verschiebt sich die Kontaktzone Riegel 5 - Sperrklinke 4 zu einem größeren Abstand zur Schwenkachse des Riegels 5 (Figur 5).

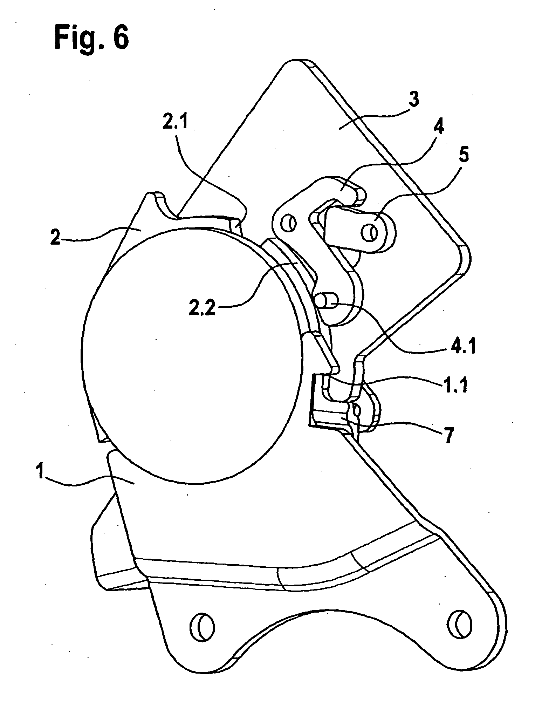

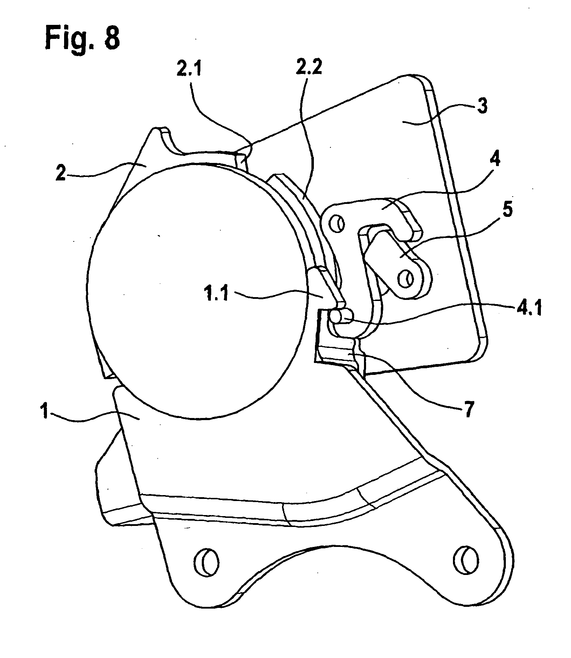

Nach dem vollständigen Ausschwenken der Sperrklinke 4 aus der Rast 2.1 kann das Beschlagteil 3 samt Sitzlehne nach vorne geklappt werden. Das in die Rast 2.1 zusammenwirkende Ende der Sperrklinke 4 gleitet hierbei auf einer Kontur 2.2 des Neigungsverstellers 2 (Figur 6). Zum Verrasten der vorgeklappten Position der Sitzlehne weist die Sperrklinke 4 einen Stift 4.1 auf, welcher mit einer zweiten Rast 1.1 am Beschlagteil 1 zusammenwirkt. Die Sitzlehne nimmt somit in der vorgeklappten Position - unabhängig von der zuvor eingestellten Kompfortstellung - stets die gleiche Vorklappneigung ein (Figur 8). Da hier das Ende der Sperrklinke 4 auf der Kontur 2.2 aufliegt, wirkt der Stift 4.1 derartig mit der Rast 1.1 zusammen, dass dieser über den Hebel 7 aus der rast 1.1 ausgehoben werden kann.

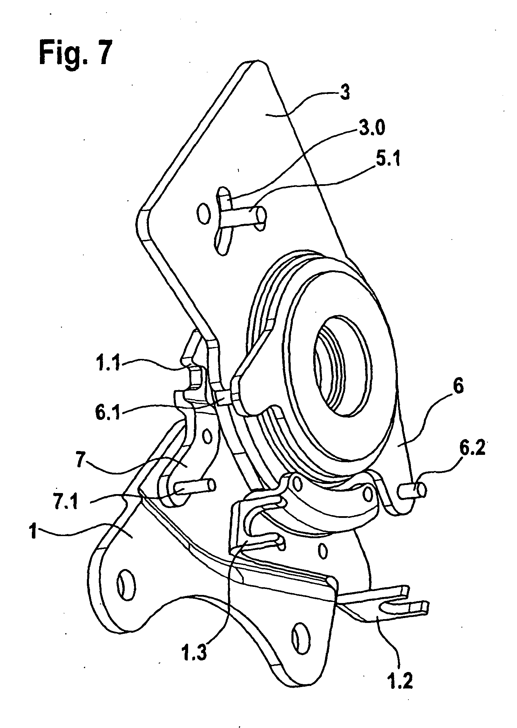

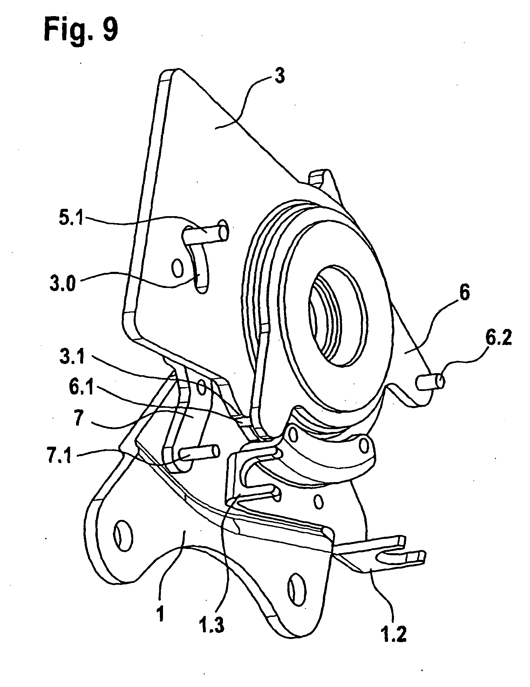

Beim Vorklappen der Sitzlehne ist die Längsverstellung des Fahrzeugsitzes zu entriegeln. Hierzu weist das Beschlagteil 3 eine Kontur 3.1 auf, welche mit einem Mitnehmer 6.1 eines drehbar gegenüber dem Beschlagteil 3 gelagerten Mitnehmerringes 6 zusammenwirkt. Hierbei erfolgt der Kontakt Kontur 3.1 - Mitnehmer 6.1 erst nach einem bestimmten Verschwenkweg der Sitzlehne, des Beschlagteiles (vergleiche hierzu Figur 3 - Figur 7), so dass die Betätigung der Längsverriegelung erst nach einem bestimmten Verschwenkwinkel erfolgt (Figur 7 - Figur 9). Der Mitnehmerring 6 weist eine Anlenkung 6.2 für ein nicht dargestelltes Bowdenseil auf, welches im vorgeschwenkten Zustand der Sitzlehne die Längsverriegelung entriegelt und gleichzeitig den Setzanschlag der Easy-Entry-Einrichtung ablegt. Am Beschlagteil 1 ist die Abstützung 1.2 für das nicht dargestellte Bowdenrohr angebracht.

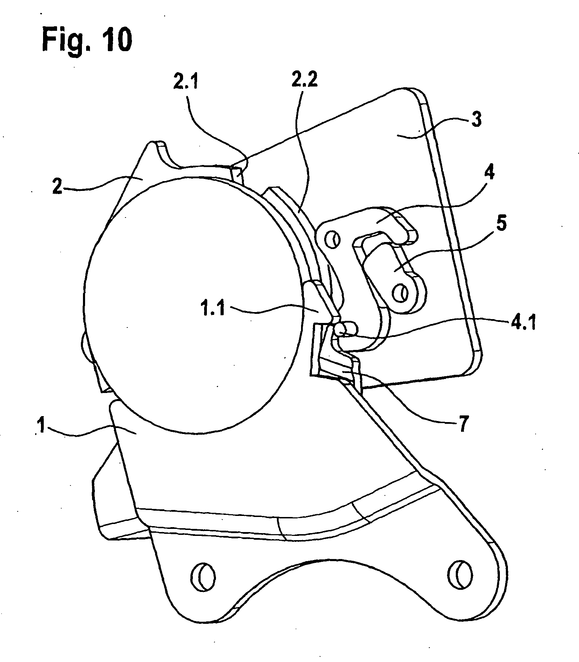

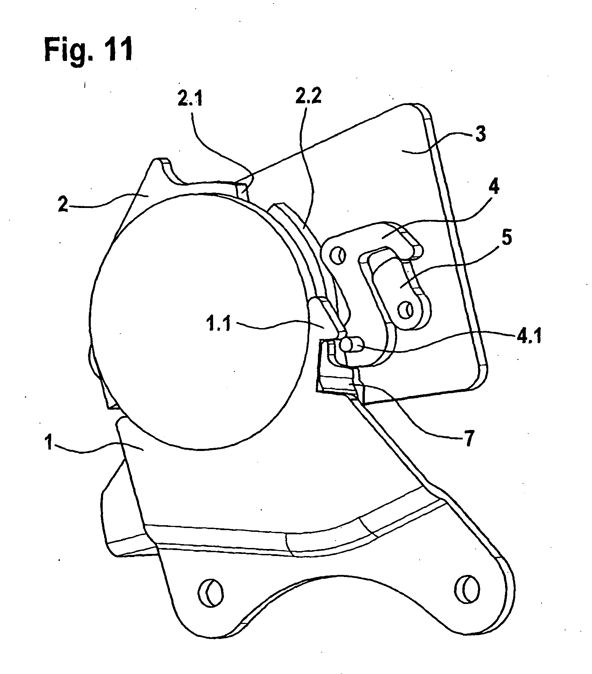

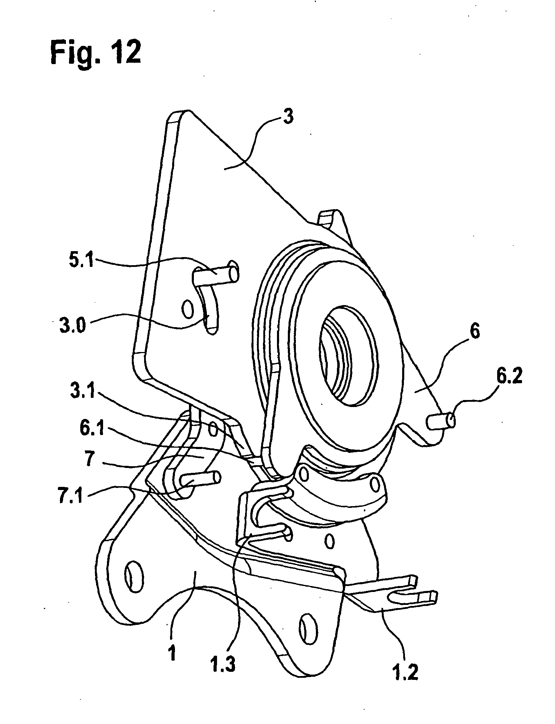

Wird der Sitz mit vorgeklappter und verriegelter Sitzlehne wieder zurück Richtung Easy-Entry-Setzanschlag verschoben (ausgehend von Position nach Figur 8), so ist bei Kontakt mit dem Easy-Entry-Setzanschlag die Verriegelung der vorgeklappten Sitzlehne zu lösen. Hierzu ist der mit dem Stift 4.1 zusammenwirkenden zweiten Rast 1.1 das schwenkbare Ende eines Hebels 7 zugeordnet, der am Beschlagteil 1 schwenkbar gelagert ist und durch welchen der Stift 4.1 der Sperrklinke 4 aus der zweiten Rast 1.1 gelöst werden kann (Figur 8, 10). Der schwenkbare Hebel 7 weist an dem Stift 7.1 eine Anlenkung für ein nicht dargestelltes Bowdenseil auf, welches bei Kontakt des Sitzes mit dem Easy-Entry-Setzanschlag den Hebel 7 verschwenkt. Das Bowdenrohr ist an einer Abstützung 1.3 des Beschlagteiles 1 aufgenommen. Die Entriegelung der Sitzlehne aus der vorgeklappten Position erfolgt über den an der Lehne angebrachten Entriegelungshebel über den Riegel 5, welcher direkt auf die Sperrklinke 4 wirkt (Figur 8, 11 und 12). Auf diese Weise ist die Vorklappungsverriegelung der Sitzlehne sowohl vom Lehnenriegel - Sitz nicht in Easy-Entry-Position - als auch durch Erreichen der Easy-Entry-Position entriegelbar. Durch das Zurückklappen der Sitzlehne in die Kompfortstellung wird dann die Längsverriegelung verriegelt - der Sitz kann so sowohl in der Easy-Entry-Position als auch davor verriegelt werden.

### Bezugszeichenliste

- 1: Beschlagteil
- 1.1: zweite Rast
- 1.2: Abstützung
- 1.3: Abstützung
- 2: Neigungsversteller
- 2.1: erste Rast
- 2.2: Kontur
- 3: Beschlagteil
- 3.1: Kontur
- 3.0: Öffnung
- 4: Sperrklinke
- 4.1: Stift
- 5: Riegel
- 5.1: Stift
- 6: Mitnehmerring
- 6.1: Mitnehmer
- 6.2: Anlenkung
- 7: Hebel
- 7.1: Stift

## Patentansprüche

1. Lehnenklappung für einen Kraftfahrzeugsitz mit
- einem ersten Beschlagteil, welches an einem Sitzunterteil angebracht ist,
- einem Neigungsversteller, welcher gegenüber dem ersten Beschlagteil verdreh- und einstellbar gelagert ist,
- einem zweiten Beschlagteil, an welchem eine Sitzlehne angebracht ist,
- einer mittels einem Riegel betätigbaren Sperrklinke, welcher eine erste Rast zur Fixierung der Sitzlehne in einer Kompfortposition und eine zweite Rast zur Fixierung der vorgeklappten Position der Sitzlehne zugeordnet ist, und
- einem Mechanismus, durch welchen die Fixierung der Sitzlehne in der vorgeklappten Position von zwei unabhängig voneinander betätigbaren Einrichtungen aufhebbar ist,
**dadurch gekennzeichnet,**
**dass** die erste Einrichtung zum Lösen der Fixierung der Sitzlehne in der vorgeklappten Position auf den Riegel (5) einwirkt und die zweite Einrichtung dem mit der zweiten Rast (1.1) zusammenwirkenden Ende (4.1) der Sperrklinke (4) zugeordnet ist.

2. Lehnenklappung nach Anspruch 1,
**dadurch gekennzeichnet,**
**dass** die erste Einrichtung ein an der Sitzlehne angebrachter, manuell betätigbarer Hebel ist.

3. Lehnenklappung nach Anspruch 1 oder 2,
**dadurch gekennzeichnet,**
**dass** der Riegel (5) über einen Seilzug betätigbar ist.

4. Lehnenklappung nach einem der vorhergehenden Ansprüche,
**dadurch gekennzeichnet,**
**dass** dem Sitz eine einen Setzanschlag aufweisende Einrichtung zur Sitzlängsverstellung zugeordnet ist, bei der der Sitz bei entriegelter Sitzlängsverstellung bis an den Setzanschlag bewegbar ist und bei Kontakt mit dem Setzanschlag das dem mit der zweiten Rast (1.1) zusammenwirkende Ende (4.1) der Sperrklinke (4) betätigbar ist.

5. Lehnenklappung nach einem der Ansprüche 1 - 4,
**dadurch gekennzeichnet,**
**dass** der zweiten Rast (1.1) ein Hebel (7) zugeordnet ist, vermittels dem das Ende der Sperrklinke (4) aus der zweiter Rast (1.1) freigebbar ist.

6. Lehnenklappung nach Anspruch 5,
**dadurch gekennzeichnet,**
**dass** das schwenkbare Ende der Sperrklinke (4) einen mit der zweiten Rast (1.1) zusammenwirkenden Stift (4.1) aufweist.

7. Lehnenklappung nach Anspruch 5 oder 6,
**dadurch gekennzeichnet,**
**dass** der Hebel (7) über einen Seilzug betätigbar ist.

8. Lehnenklappung nach einem der vorhergehenden Ansprüche,
**dadurch gekennzeichnet,**
**dass** dem die Sitzlehne tragendem Beschlagteil ein Mitnehmerring (6) zugeordnet ist, über den die Sitzlängsverriegelung betätigbar ist.

9. Lehnenklappung nach Anspruch 8,
**dadurch gekennzeichnet,**
**dass** der Mitnehmerring (6) einen mit einer Kontur (3.1) am Beschlagteil (3) zusammenwirkenden Mitnehmer (6.1) aufweist.

## Claims

1. Backrest pivot for a vehicle seat comprising
- a first fitting attached to a seat bottom part,
- an angle adjuster which is mounted so as to be rotatable and adjustable relative to the first fitting,
- a second fitting to which a backrest is attached,
- a locking latch which can be actuated by means of a bolt and with which there are associated a first catch for fixing the backrest in a comfortable position and a second catch for fixing the backrest in a folded-forward position, and
- a mechanism by means of which the fixing of the backrest in the folded-forward position can be cancelled by two means which can be actuated independently of each other,
**characterized in that** the first means for releasing the fixing of the backrest in the folded-forward position acts on the bolt (5) and the second means is associated with the end (4.1) of the locking latch (4) that interacts with the second catch (1.1).

2. Backrest pivot according to Claim 1, **characterized in that** the first means is a manually actuatable lever attached to the backrest.

3. Backrest pivot according to either Claim 1 or Claim 2, **characterized in that** the bolt (5) can be actuated via a sheathed cable.

4. Backrest pivot according to any one of the preceding claims, **characterized in that** there is associated with the seat a means, having a positioning stop, for longitudinally adjusting the seat wherein, when the means for longitudinally adjusting the seat is disengaged, the seat is movable up to the positioning stop and, on contact with the positioning stop, the end (4.1) of the locking latch (4) that interacts with the second catch (1.1) can be actuated.

5. Backrest pivot according to any one of Claims 1 - 4, **characterized in that** a lever (7), by means of which the end of the locking latch (4) can be released from the second catch (1.1), is associated with the second catch (1.1).

6. Backrest pivot according to Claim 5, **characterized in that** the pivotable end of the locking latch (4) has a pin (4.1) interacting with the second catch (1.1).

7. Backrest pivot according to either Claim 5 or Claim 6, **characterized in that** the lever (7) can be actuated via a sheathed cable.

8. Backrest pivot according to any one of the preceding claims, **characterized in that** an entrainment ring (6), via which the longitudinal engagement means of the seat can be actuated, is associated with the fitting currying the backrest.

9. Backrest pivot according to Claim 8, **characterized in that** the entrainment ring (6) has an entrainment means (6.1) interacting with a contour (3.1) on the fitting (3).

## Revendications

1. Système de rabattement de dossier pour un siège de véhicule automobile, comprenant
- une première pièce de ferrure, qui est placée sur une partie inférieure de siège,
- un élément de réglage d'inclinaison, qui est monté rotatif et réglable par rapport à la première pièce de ferrure,
- une deuxième pièce de ferrure sur laquelle est placé un dossier de siège,
- un cliquet de blocage pouvant être actionné par un verrou et auquel est associé un premier cran d'encliquetage pour la fixation du dossier de siège dans une position de confort, et un deuxième cran d'encliquetage pour la fixation de la position rabattue vers l'avant du dossier de siège, et
- un mécanisme par lequel la fixation du dossier de siège dans la position rabattue vers l'avant peut être supprimée par deux dispositifs pouvant être actionnés indépendamment'l'un de l'autre,
**caractérisé en ce que** le premier dispositif pour interrompre la fixation du dossier de siège dans la position rabattue vers l'avant agit sur le verrou (5), et le deuxième dispositif est associé à l'extrémité (4.1) du cliquet de blocage (4), qui interagit avec le deuxième cran d'encliquetage (1.1).

2. Système de rabattement de dossier selon la revendication 1,
**caractérisé en ce que** le premier dispositif est un levier rapporté sur le dossier de siège et pouvant être actionné manuellement.

3. Système de rabattement de dossier selon la revendication 1 ou 2,
**caractérisé en ce que** le verrou (5) peut être actionné par l'intermédiaire d'un système de tirant à câble.

4. Système de rabattement de dossier selon l'une des revendications précédentes,
**caractérisé en ce qu'**au siège est associé un dispositif pour le réglage longitudinal du siège, qui présente une butée de positionnement et grâce auquel le siège, lorsque le dispositif de réglage longitudinal du siège est déverrouillé, peut être déplacé jusqu'à la butée de positionnement, et lors de l'entrée en contact avec la butée de positionnement, l'extrémité (4.1) du cliquet de blocage (4), qui interagit avec le deuxième cran d'encliquetage (1.1), peut être actionnée.

5. Système de rabattement de dossier selon l'une des revendications 1 à 4,
**caractérisé en ce qu'**au deuxième cran d'encliquetage (1.1) est associé un levier (7) au moyen duquel l'extrémité du cliquet de blocage (4) peut être dégagée du deuxième cran d'encliquetage (1.1).

6. Système de rabattement de dossier selon la revendication 5,
**caractérisé en ce que** l'extrémité pivotante du cliquet de blocage (4) comporte un tourillon (4.1) interagissant avec le deuxième cran d'encliquetage (1.1).

7. Système de rabattement de dossier selon la revendication 5 ou 6,
**caractérisé en ce que** le levier (7) peut être actionné par l'intermédiaire d'un système de tirant à câble.

8. Système de rabattement de dossier selon l'une des revendications précédentes,
**caractérisé en ce qu'**à la pièce de ferrure portant le dossier de siège, est associé un anneau entraîneur (6) par l'intermédiaire duquel peut être actionné le dispositif de blocage longitudinal du siège.

9. Système de rabattement de dossier selon la revendication 8,
**caractérisé en ce que** l'anneau entraîneur (6) comporte un entraîneur (6.1) interagissant avec un contour (3.1) sur la pièce de ferrure (3).
